# DEMANDE DE BREVET EUROPEEN

(11) **EP 1 719 738 A1**
(43) Date de publication de la demande: **08.11.2006**
(21) Numéro de dépôt: 05103768.7
(22) Date de dépôt: 04.05.2005
(51) Int. Cl.: C02F 3/06, C02F 3/10, B01J 19/32

(54) **Cassette réacteur biologique pour station d'épuration**

(71) Demandeur: EPUR S.A., 4460 Grace-Hollogne (BE)
(72) Inventeur: Hartenstein, Marcel, 4122, Plainevaux (BE)
(74) Mandataire: Kihn, Pierre Emile Joseph

(57) **Abrégé**

L'invention concerne une cassette réacteur biologique comprenant au moins deux cloisons de faible épaisseur en matériaux inaltérables, comprenant un bord de scellement sur au moins une partie de leur pourtour et éventuellement un ou plusieurs orifices d'écoulement, un support pour micro-organismes disposé entre ces cloisons, et des moyens de solidarisation permettant de fixer ensemble lesdites cloisons et éventuellement le support. L'invention concerne également l'utilisation d'une cassette réacteur biologique pour la transformation d'une cuve en béton, en métal ou en matière synthétique en station d'épuration des eaux usées, ainsi qu'une telle station d'épuration.

## Description

### Domaine technique

La présente invention concerne une cassette réacteur biologique pour stations d'épuration.

### Etat de la technique

Les réacteurs aérobies sont largement utilisés pour toutes sortes d'applications microbiologiques, qu'il s'agisse de dégradations d'effluents industriels ou domestiques ou même de synthèses de produits à (haute) valeur ajoutée à l'aide de souches spécifiques de micro-organismes sélectionnés ou même modifiés génétiquement.

L'épuration des eaux domestiques peut être réalisée grâce à des stations d'épuration qui comprennent généralement plusieurs cuves ou compartiments. L'eau passe successivement par les compartiments intégrant chacun une fonction différente, par exemple le dégraissage des eaux, la dégradation microbiologique, la décantation, etc.

Ces stations d'épuration à culture fixée aérobies immergées, encore appelées à lit fixe aérobies immergées, présentent la particularité d'un réacteur biologique cloisonné entre deux parois étanches afin de bien différencier la chambre de pré-traitement, le réacteur biologique et la chambre de post-traitement. Ainsi, la dégradation microbiologique dans ces stations d'épuration est généralement réalisée au moyen d'un compartiment ou réacteur aérobie à lit fixe immergé, dans lequel les micro-organismes peuvent se fixer sur un support.

En pratique, les stations d'épuration sont habituellement fabriquées au départ d'une cuve en béton standard du marché qui est adaptée en y installant d'abord chacune des cloisons en béton séparant les différents compartiments et en équipant ensuite un des compartiments du lit fixe nécessaire aux micro-organismes pour la dégradation biologique.

La grande diversité du marché en terme de cuves, une gamme de produits très large en terme de dimensionnement de stations d'épuration, leur fabrication, le poids des cloisons, leur fabrication, leur manutention, l'importance du stock que cela suppose, les espaces de stockage, les risques de casse, sont autant de facteurs qui contribuent à la difficulté et au coût élevé de procéder au cloisonnement des cuves avant équipement du réacteur biologique proprement-dit.

A titre indicatif, dans le seul programme actuel du demandeur, pas moins de 36 modèles existent dans la gamme de station d'épuration allant de 5 à 30 habitants, ce qui correspond à 30 types de cloisons différentes. Les exigences spécifiques des différents pays, y compris les réglementations européennes, s'ajoutent à cette diversité.

En effet, chaque station ou cuve nécessite en général deux cloisons ou plus en fonction du nombre de compartiments souhaités, de dimensions, de forme et de configuration différentes, devant être rapportées dans la cuve après leur fabrication et devant y être scellées de manière à les rendre solidaire de la cuve et étanche. Ceci suppose en terme de production : des fabrications spécifiques, des stockages importants, des manutentions lourdes et coûteuses, susceptibles de surcroît de générer de la casse.

### Objet de l'invention

Un objet de la présente invention est par conséquent de proposer une solution permettant d'une part de simplifier l'adaptation d'une cuve en béton de type standard en station d'épuration et de réduire d'autre part les problèmes dus à la manutention et au stockage.

Conformément à l'invention, cet objectif est atteint par une cassette réacteur biologique selon la revendication 1.

### Description générale de l'invention

Afin de résoudre le problème mentionné ci-dessus, la présente invention propose une cassette réacteur biologique comprenant
a) au moins deux cloisons de faible épaisseur en matériaux inaltérables, comprenant un bord de scellement sur au moins une partie de leur pourtour et éventuellement un ou plusieurs orifices d'écoulement,
b) un support pour micro-organismes disposé entre les cloisons a),
c) des moyens de solidarisation permettant de fixer ensemble les cloisons a) et éventuellement le support b).

En pratique, une telle cassette pré-assemblée est introduite dans une cuve existante, que celle-ci soit en béton, en métal ou en matière synthétique, afin de l'équiper d'un réacteur de dégradation biologique tout en compartimentant la cuve d'une façon appropriée pour en faire une station d'épuration fonctionnelle et prête à l'emploi.

Les avantages de la présente invention sont nombreux. L'intérêt premier de l'invention est de permettre l'utilisation de cuves standard du marché sans y apporter de modifications ou d'équipements spécifiques. L'intérêt de l'invention réside également dans le fait d'éviter la fabrication de cloisons en béton, très exigeante en termes de travail pour la fabrication des coffrages, de temps pour le séchage du béton et de stockage des cloisons finies, sans oublier les problèmes de manutention, de manipulation et de placement pièce par pièce des cloisons lourdes dans les cuves. De plus, l'intérêt de l'invention réside également en un gain économique important dans la fabrication d'une station d'épuration.

Les matériaux inaltérables utilisés sont de préférence choisis parmi les tôles métalliques, comme l'acier inoxydable et/ou les matières synthétiques imputrescibles, tels que le PVC, polyéthylène haute densité, polyéthylène, polyester, polypropylène, voire tout autre matériau adapté. L'épaisseur des matériaux utilisés dépendra évidemment de la nature du matériau utilisé et de la rigidité souhaitée, cette rigidité pouvant d'ailleurs être augmentée par des moyens connus, par exemple par l'application de cannelures et d'autres structures, par le montage de profilés de renforcement, etc. La cassette pré-assemblée est par conséquent légère par comparaison à des cloisons classiques en béton, ce qui facilite grandement la manipulation et augmente la sécurité des personnes chargées de l'installation.

Ces matériaux sont en outre faciles à travailler et à découper et leur montage peut se faire en atelier sans outillage particulier.

Les cloisons délimitant la cassette et ultérieurement les compartiments de la station d'épuration sont fixées ensemble par des moyens de solidarisation. Dans une forme de réalisation avantageuse, ces moyens de solidarisation comprennent des entretoises montées entre les cloisons en nombre suffisant pour garantir une rigidité et une solidité suffisante. Les entretoises peuvent présenter une section quelconque appropriée, sont faites en un matériau inaltérable, comme par exemple en acier inoxydable ou même en matière synthétique et sont fixées aux cloisons par soudage, boulonnage, vissage, emboîtement, collage ou par toute autre méthode appropriée.

Dans une autre forme de réalisation, les moyens de solidarisation comprennent des cloisons latérales et/ou inférieures supplémentaires reliant les deux cloisons principales, éventuellement complétés par des entretoises. Selon une première variante, les cassettes réacteur seront composées du lit de réacteur placé entre les deux parois plus une cloison formant un fond, de telle sorte qu'elle forme alors un cuvelage fermé en sa partie inférieure. Selon une deuxième variante, les cassettes réacteur seront composées du réacteur placé entre les deux cloisons complétées par un cloisonnement vertical à chaque extrémité latérale. Selon une troisième variante, les cassettes réacteur seront composées d'un réacteur placé entre les deux cloisons avec un cloisonnement vertical à chaque extrémité latérale et un fond de telle sorte que la cassette réacteur forme alors un cuvelage fermé en ses parties inférieure et latérales. Il est à noter cependant que la forme de la cassette n'est critique que dans le sens où elle doit être appropriée pour un réacteur biologique et qu'elle doit permettre de part sa forme et ses dimensions la compartimentation d'une cuve de taille et de forme déterminées.

La nature du lit de réacteur biologique n'est pas non plus critique, du moment qu'il est approprié aux fins auxquelles il est destiné. Il peut comprendre des supports de nature différente ; par exemple tubulaires, sphériques, coniques, lamellaires etc. (lit fixe) ou en version structures tourbillonnantes libres dans l'eau du compartiment (lit tourbillonnant). Le support pour micro-organismes préféré constituant le lit de réacteur est un support structuré constitué d'un grand nombre d'unités individuelles de préférence de forme grossièrement tubulaires rassemblées et fixées ensemble par paquets de dimensions appropriées, qui sont de manière avantageuse retenues entre les cloisons par des entretoises et/ou par un fond de la manière décrite ci-dessus.

Lorsque la cassette est installée dans une cuve, il sera généralement nécessaire pour le bon fonctionnement de la station d'épuration, c'est-à-dire pour un écoulement approprié des eaux au travers des différents compartiments, de garantir une étanchéité suffisante des différents compartiments, c'est-à-dire à la jonction entre les bords de scellement des cloisons et les parois de la cuve.

Pour cela, il est possible, dans un mode réalisation de l'invention, de sceller la cassette à l'intérieur de la cuve par les bords de scellement une fois que celle-ci est installée, par des moyens connus, par exemple au moyen d'un joint en béton pour les cuves en béton (les bords de scellement pouvant comprendre dans ce cas en outre une armature pour joint en béton), par soudage entre cloisons et cuves (pour les matériaux compatibles), par l'application d'une masse d'étanchéité le long des bords de scellement et les parois de la cuve, notamment au moyen de silicone, par collage avec une colle appropriée, par joints d'étanchéité, etc.

Une autre variante prévoit la fixation ou l'application préalable à l'intérieur de la cuve d'un moyen de guidage et d'étanchéité, par exemple des profilés en U montés sur les parois de la cuve ou des saignées pratiquées dans ces parois (en béton) qui sont destinés à recevoir les bords de scellement des cloisons tout en rendant l'ensemble suffisamment étanche.

Dans un mode de réalisation avantageux de l'invention, les bords de scellement des cloisons comprennent un joint flexible, qui évitera d'une part de devoir réaliser un jointement tel que décrit ci-dessus une fois que la cassette est installée dans la cuve et qui permettra d'autre part une installation amovible de la cassette, facilitant ainsi par exemple un éventuel entretien ultérieur. Un tel joint flexible peut être tout moyen permettant de rendre la jonction entre les cloisons de la cassette au niveau des bords de scellement et les parois de la cuve suffisamment étanche pour le bon fonctionnement de la station d'épuration. Il peut s'agir par exemple d'une lame ou d'un bourrelet en matériau synthétique faisant saillie au niveau des bords de scellement et qui, au moment de l'installation de la cassette dans la cuve épousera les parois de la cuve par déplacement latéral et/ou par compression.

Comme mentionné ci-dessus, les cassettes réacteurs biologiques sont particulièrement adaptées pour l'équipement simple et rapide d'une cuve pour la transformer en station d'épuration.

Une installation amovible telle que décrite ci-dessus peut se révéler particulièrement utile pour la maintenance ou le remplacement d'un système d'aération.

Un autre avantage de la présente invention, outre la réduction significative du temps nécessaire à la confection d'une station d'épuration, est le regroupement en atelier de la majeure partie du travail restant, c'est-à-dire une séparation spatio-temporelle de l'assemblage et de l'installation proprement-dite permettant une gestion simplifiée de la main d'oeuvre.

Ainsi, il est possible de faire livrer la cuve directement chez le client et de pouvoir y installer, rapidement et sans nécessiter d'outillage lourd sur place, la cassette réacteur biologique qui a été préfabriquée dans des conditions de travail optimales. En effet, la présente invention réduit significativement, ou même entièrement dans le cas d'une installation amovible, le temps de travail à l'intérieur de la cuve dans des conditions souvent difficiles dues à l'exiguïté des cuves compartimentées.

L'invention contribue de ce fait également à la sécurité des personnes chargées de l'installation. En effet, lors de l'installation individuelle classique des cloisons en béton, il existe toujours un risque de basculement des cloisons relativement lourdes avant que celles-ci ne soient définitivement fixées aux parois de la cuve. Ce risque est avantageusement éliminé grâce à la présente invention, entre autres par le choix de matériaux plus légers, par l'assemblage à l'extérieur de la cuve dans de meilleures conditions et surtout par une meilleure stabilité au basculement de la cassette.

Un autre aspect de la présente invention prévoit l'utilisation d'une cassette telle que décrite précédemment pour la transformation d'une cuve en béton, en métal ou en matière synthétique en station d'épuration.

Les cassettes selon l'invention conviennent non seulement pour l'équipement de nouvelles cuves, mais également pour ré-équiper des stations d'épurations existantes, par exemple pour les rendre conformes aux nouvelles réglementations. L'avantage particulier dans ce cas est la réduction au strict minimum des temps d'interruption du système existant et des perturbations, inconvénients et coûts qu'ils engendrent.

Finalement, un aspect supplémentaire, la présente invention concerne une station d'épuration d'eaux usées comprenant une cuve de type standard, c'est-à-dire en béton, en métal ou en matière synthétique, et une cassette réacteur biologique telle que décrite ci-dessus.

### Brève description des dessins

D'autres particularités et caractéristiques de l'invention ressortiront de la description détaillée de quelques modes de réalisation avantageux présentés ci-dessous, à titre d'illustration, en se référant aux dessins annexés. Ceux-ci montrent:
Fig. 1: modèles de cloisonnements existants (non exhaustif) ;
Fig. 2: lit de réacteur biologique tubulaire (exemple non exhaustif) ;
Fig. 3: exemple de réalisation selon l'invention d'une cassette réacteur biologique à deux cloisons parallèles avec entretoises (C), les détails (A) et (B) montrant des configurations possibles pour les joints flexibles ;
Fig. 4: autre exemple de réalisation selon l'invention d'une cassette réacteur biologique à deux cloisons perpendiculaires ;
Fig. 5 : autre exemple de réalisation selon l'invention d'une cassette réacteur biologique à deux cloisons parallèles avec entretoises, deux cloisons latérales et une cloison inférieure.

### Description détaillée de différents modes de réalisation

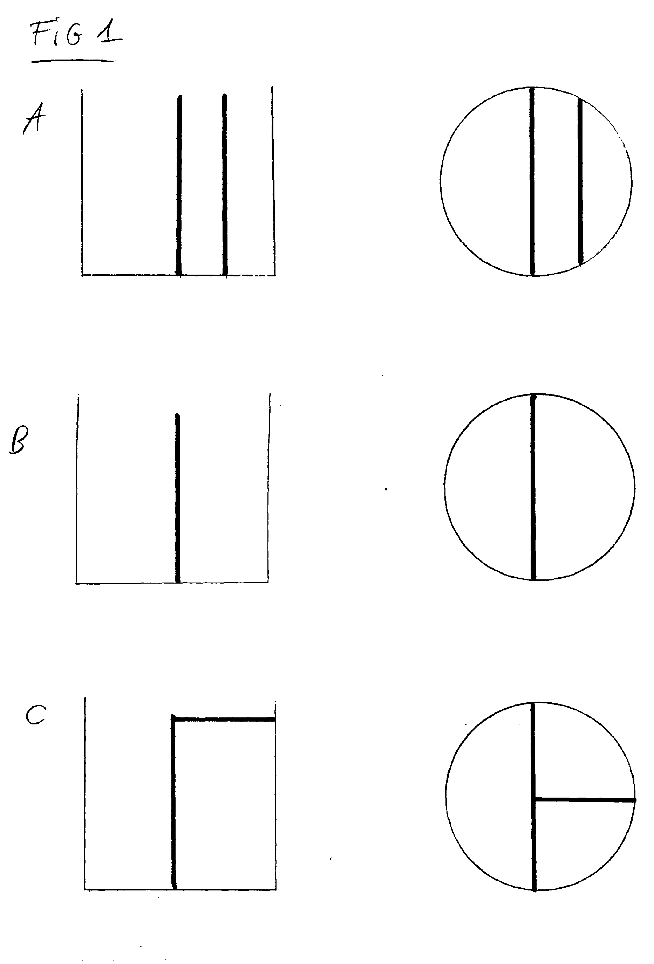

La Fig. 1 présente différents cloisonnements de cuves pour la fabrication de stations d'épuration d'eaux usées à 2 (Fig. 1B) ou à 3 compartiments (Fig. 1A et 1C). Selon l'état de la technique, une cloison est placée dans la cuve, fixée et scellée sur le pourtour. On procède de la même manière avec les cloisons suivantes. Finalement, le lit de réacteur biologique est introduit dans le compartiment respectif avant ou après y avoir installé le système d'aération.

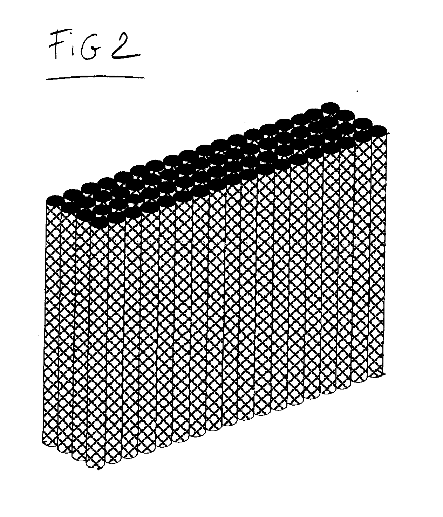

La Fig. 2 représente un exemple de lit de réacteur biologique (2) structuré tubulaire pouvant être utilisé dans une cassette réacteur biologique selon l'invention.

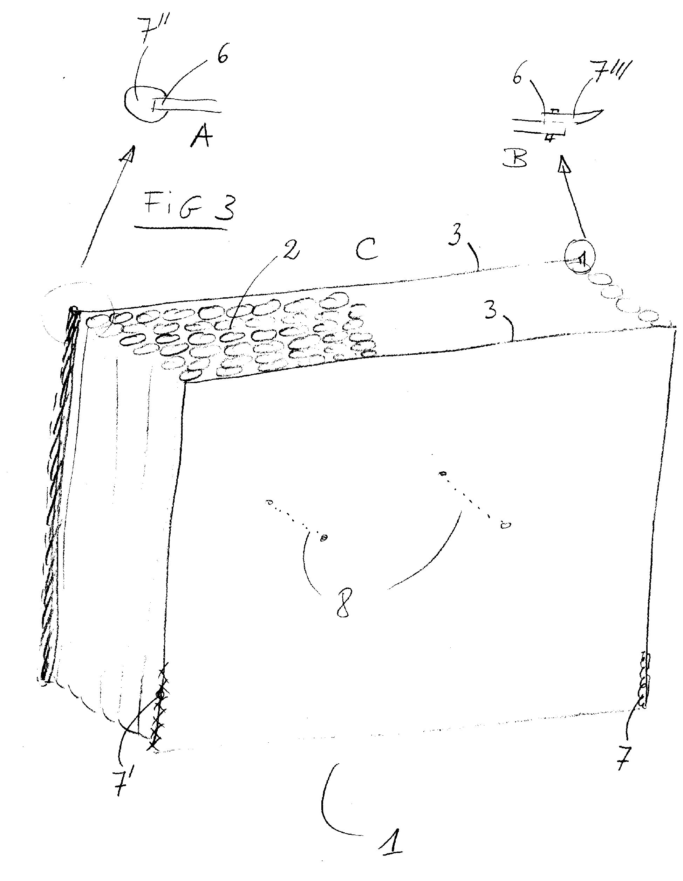

La Fig. 3 représente une forme de réalisation préférée de l'invention comprenant un tel lit de réacteur biologique (2) pré-assemblé fixé entre deux cloisons (3) légères de telle sorte que cet ensemble forme une cassette réacteur biologique préfabriquée (1) permettant de fabriquer des stations d'épuration à trois compartiments. Les deux cloisons (3) sont solidarisées par des entretoises (8) en nombre suffisant (deux seulement étant représentées sur la figure).

Pour la mise en place, il suffit d'introduire la cassette réacteur préfabriquée dans la cuve (non représentée) et à effectuer, le cas échéant, un joint d'étanchéité ou de scellement (7) le long des bords de scellement (6).

Ce joint d'étanchéité (7) peut être réalisé soit en béton pour les cuves en béton, auquel cas, une armature (7') de joint de scellement équipera éventuellement les cloisons en leur périphérie extérieure, c'est-à-dire au niveau des bords de scellement.

Ce joint (7) peut également être en matière synthétique rapporté pour les cuves synthétiques. Dans le cas de matériaux compatibles entre les cloisons et les parois de la cuve, la cassette réacteur préfabriquée pourra également être soudée à la cuve en ses périphéries.

En variante avantageuse de l'invention, le joint d'étanchéité (7) pourra être constitué d'une masse d'étanchéité appliquée le long des bords de scellement et les parois de la cuve, par exemple des joints de silicone, par collage avec une colle appropriée, par joints d'étanchéité, etc.

Dans le cas d'une variante amovible de la cassette, le joint d'étanchéité (7) peut être formé d'un matériau flexible fixé le long des bords de scellement (6), tel que montré à titre d'exemples sous les références (7" et 7'") dans les détails (A) et (B) de la Fig. 3. Lors de l'installation de la cassette (1) dans la cuve (non représentée), ces joints sont comprimés ou repliés contre les parois de la cuve et épousent suffisamment bien la paroi pour assurer un fonctionnement correct de la station d'épuration.

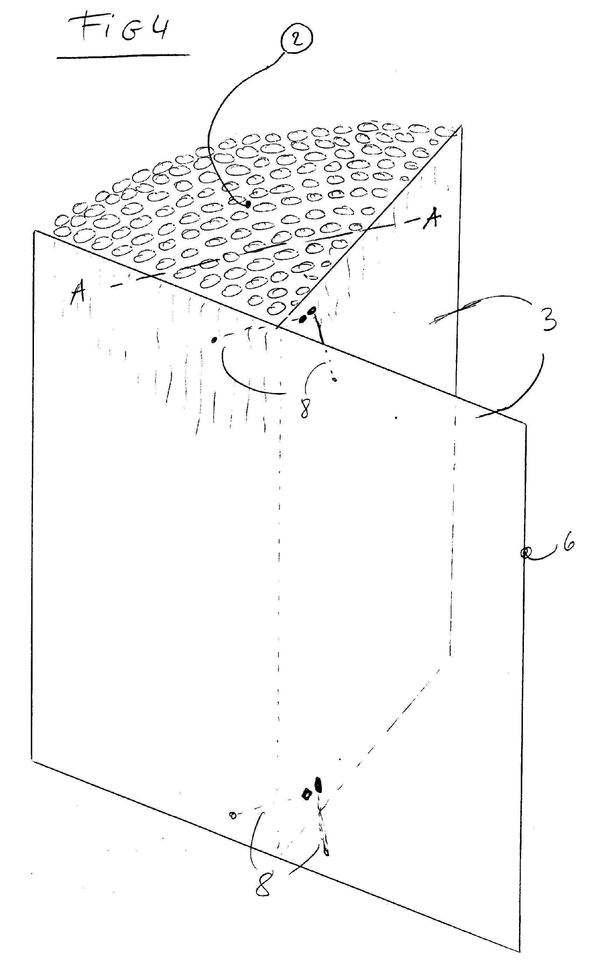

Il est à noter que les cassettes réacteur pourront avoir une forme autre que rectangulaire. En effet, la Fig. 4 est également une forme de réalisation à deux cloisons, mais celles-ci sont disposées de manière perpendiculaire l'une par rapport à l'autre et les moyens de solidarisation peuvent par exemple être formés d'une soudure (ligne en pointillé à l'intersection des deux cloisons) ou de boulons de fixation. Il est également possible de fixer davantage les cloisons par des entretoises (8). Le lit de réacteur (2) est disposé entre les cloisons (3), voir ligne A-A de la Fig. 4.

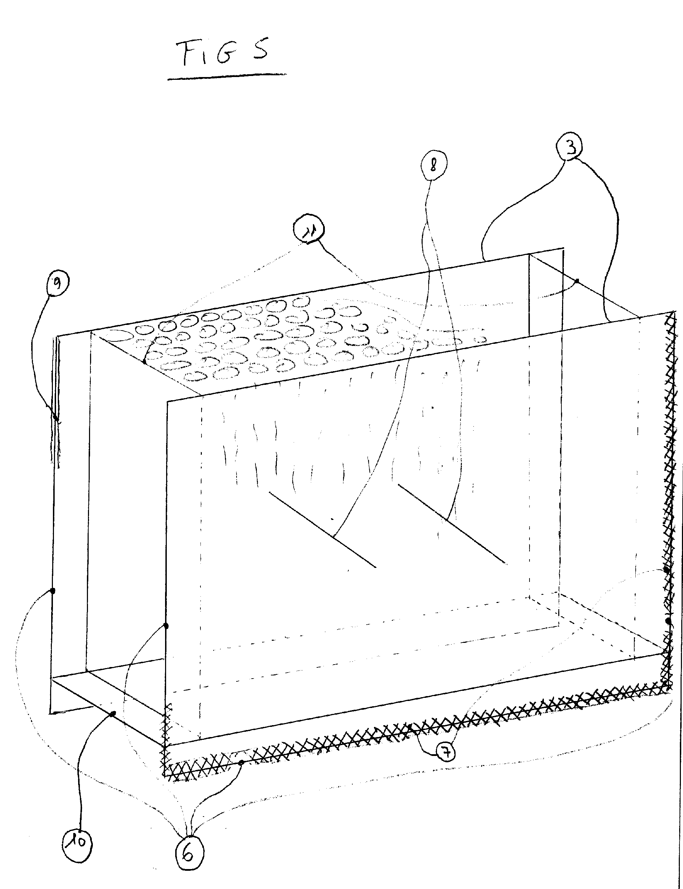

La Fig. 5 correspond à une forme de réalisation proche de celle de la Fig. 3, mais comporte en outre des cloisons latérales (11) et une cloison inférieure (10) éventuellement complétée par des entretoises (8).

### Légende

1- Cassette réacteur biologique
2- Lit de réacteur
3- Cloisons de faible épaisseur
6- Bords de scellement
7- Joints de scellement (7', 7", 7"')
8- Entretoises
9- Soudure
10- Fond de cassette réacteur
11- Cloisons latérales de cassette réacteur

## Revendications

1. Cassette réacteur biologique comprenant
a) au moins deux cloisons de faible épaisseur en matériaux inaltérables, comprenant un bord de scellement sur au moins une partie de leur pourtour et éventuellement un ou plusieurs orifices d'écoulement,
b) un support pour micro-organismes disposé entre les cloisons a),
c) des moyens de solidarisation permettant de fixer ensemble les cloisons a) et éventuellement le support b).

2. Cassette selon la revendication 1, dans laquelle les matériaux inaltérables sont choisis parmi l'acier inoxydable et/ou les matières synthétiques imputrescibles, tels que le PVC, polyéthylène haute densité, polyéthylène, polyester, polypropylène.

3. Cassette selon la revendication 1 ou 2, dans laquelle les moyens de solidarisation comprennent des entretoises montées entre les cloisons.

4. Cassette selon l'une quelconque des revendications 1 à 3, dans laquelle les moyens de solidarisation comprennent des cloisons latérales et/ou inférieures supplémentaires.

5. Cassette selon l'une quelconque des revendications 1 à 4, dans laquelle le support pour micro-organismes est un support structuré tubulaire, sphérique, conique ou lamellaire, constitué d'un grand nombre d'unités individuelles, de préférence de forme grossièrement tubulaire, rassemblées et fixées ensemble par paquets de dimensions appropriées.

6. Cassette selon l'une quelconque des revendications 1 à 5, dans laquelle le bord de scellement comprend un joint flexible.

7. Utilisation d'une cassette réacteur biologique selon l'une quelconque des revendications 1 à 6 pour la transformation d'une cuve en béton, en métal ou en matière synthétique en station d'épuration des eaux usées.

8. Station d'épuration des eaux usées comprenant une cuve en béton, en métal ou en matière synthétique et une cassette réacteur biologique selon l'une quelconque des revendications 1 à 6.
